# EUROPEAN PATENT SPECIFICATION

(11) **EP 3 141 756 B1**
(45) Date of publication and mention of the grant of the patent: **22.09.2021**
(21) Application number: 16182182.2
(22) Date of filing: 01.08.2016
(51) Int. Cl.: F04D 13/04, F04D 15/00, F04D 29/24, A47J 31/54, F24H 1/10, F24H 9/20

(54) **FLUID HEATING APPARATUS**
FLÜSSIGKEITSERWÄRMUNGSVORRICHTUNG
APPAREIL DE CHAUFFAGE DE FLUIDE

(30) Priority: 08.09.2015 JP 2015176428
(43) Date of publication of application: 15.03.2017
(73) Proprietor: AISIN SEIKI KABUSHIKI KAISHA, Kariya-shi, Aichi 448-8650 (JP)
(72) Inventor: WATANABE, Masato, Kariya-shi,, Aichi 448-8650 (JP); OTAKE, Shogo, Kariya-shi,, Aichi 448-8650 (JP)
(74) Representative: TBK

(56) References cited:
- DE-A1- 4 141 359
- JP-A- H0 942 139
- US-A- 2 111 441
- US-A- 3 006 534
- US-A- 5 143 049
- None

## Description

This disclosure generally relates to a fluid heating apparatus according to the preamble of claim 1, the features of which are known from e.g. document JP H09-042139 A.

A known apparatus which heats fluid with the use of a heater is disclosed in document JP2015-45420A. According to the known apparatus, the presence or absence of the fluid (whether or not the fluid equal to or greater than a predetermined amount is present) is detected by the presence or absence of rotation of an impeller.

Document US 5 143 049 A discloses a plumbing installation wherein hot water is piped from a water heater or reservoir to a plurality of taps by a distribution conduit, an improved recirculation circuit of limited power consumption to continually pump small amounts of hot water from said conduit back into said reservoir which comprises a low power radial pump unprotected by a check valve against backflow, but having a rotary impeller with linear radial vanes leading to an annular output channel larger than necessary for maximum pumping throughput. The oversized annular channel and linear vanes limit the impact of any backflow upon the impeller and prevents its operating as a turbine as the pump is subjected to back pressure when a large amount of water is being drawn through the taps.

Document US 2 111 441 A discloses a pump in a liquid fluid heating apparatus.

Document US 3 006 534 A discloses a pump in a gaseous fluid heating apparatus.

Document DE 414 13 59 A relates to a radial blower comprising a housing having a spiral inner contour and a closed impeller having blades (vanes) curved rearwards, whose diameter is much larger than its flow outlet width.

It is the object of the invention to provide a fluid heating apparatus in which a detection performance of fluid is enhanced.

The object of the invention is achieved by a fluid heating apparatus according to claim 1. Advantageous embodiments are carried out according to the dependent claims.

According to the invention, a fluid heating apparatus includes an impeller arranged in a flow detection region in which flow of fluid to be heated by a heater is detected, wherein the impeller includes a blade portion, and the blade portion includes a portion curved from a base end side corresponding to a rotational center side to a distal end side corresponding to an outer side, the portion being curved towards a side that is opposite to a rotational direction.

Accordingly, a component of a force applied from the fluid to the impeller, the component which is in a direction working on the rotation of the impeller, increases. Consequently, the impeller is rotated efficiently. That is, a performance of detecting the fluid is enhanced.

The flow detection region includes a bottom surface including a curved surface or an inclined surface, and the curved surface or the inclined surface is formed to be displaced downwardly towards an outer side in the radial direction.

According to the above-described configuration, frictional resistance generated between the bottom surface and the impeller is reduced. Consequently, the impeller is rotated efficiently. That is, the performance of detecting the fluid is enhanced.

The blade portion can include a surface at a rotational direction side, the surface at the rotational direction side includes a curved surface or an inclined surface, and the curved surface or the inclined surface is formed in such a manner that the thickness of the blade portion is reduced towards an outer edge. Accordingly to the above-described configuration, resistance of fluid (for example water) against rotations of the impeller is reduced. Consequently, the impeller is rotated efficiently. That is, the performance of detecting the fluid is enhanced.

The flow detection region can include a flat surface positioned at an inner side relative to the curved surface or the inclined surface.

According to the above-described configuration, the frictional resistance generated between the bottom surface and the impeller is reduced by the curved surface or the inclined surface. Consequently, the impeller is rotated efficiently. That is, the performance of detecting the fluid is enhanced. In addition, due to the flat surface provided at the bottom surface, the impeller is rotated in a stable manner.

The fluid heating apparatus can include a flow passage through which the fluid is sent to the flow detection region, wherein the flow passage includes a first portion of which an outlet is connected to the flow detection region and a second portion of which an outlet is connected to an inlet of the first portion, and a cross-sectional area of the first portion is smaller than a cross-sectional area of the second portion.

According to the above-described configuration, flow speed of the fluid entering the flow detection region is increased. That is, a force with which the fluid pushes the impeller is increased, thereby to rotate the impeller efficiently. In consequence, the performance of detecting the fluid is enhanced.

The blade portion can include a distal end surface including a curved surface or an inclined surface, and the curved surface or the inclined surface is formed in such a manner that the length of the blade portion is reduced towards an outer edge at an upper side or an outer edge at a lower side.

According to the above-described configuration, frictional resistance generated between the blade portion, and an upper surface or a lower surface (a bottom surface) which forms the flow detection region is reduced. Consequently, the impeller is rotated efficiently.

The blade portion can include a surface at a rotational direction side, the surface at the rotational direction side includes a curved surface or an inclined surface, and the curved surface or the inclined surface is formed in such a manner that the thickness of the blade portion is reduced towards an outer edge at an upper side or an outer edge at a lower side.

According to the above-described configuration, the frictional resistance generated between the blade portion, and the upper surface or the lower surface (the bottom surface) which forms the flow detection region is reduced. Consequently, the impeller is rotated efficiently.

### BRIEF DESCRIPTION OF THE DRAWINGS

The foregoing and additional features and characteristics of this disclosure will become more apparent from the following detailed description considered with the reference to the accompanying drawings, wherein:
Fig. 1A is an external view of a fluid heating apparatus according to an embodiment disclosed here;
Fig. 1B is a view illustrating a state in which a cover portion is removed from the fluid heating apparatus;
Fig. 2 is a cross-sectional view taken along line II-II of Fig. 1A;
Fig. 3 is a plan view illustrating, in an enlarged manner, a flow passage and a flow detection region (an impeller arranged in the flow detection region) according to the embodiment;
Fig. 4 is a cross-sectional view illustrating, in an enlarged manner, the flow detection region (the impeller arranged in the flow detection region) according to the embodiment;
Fig. 5 is an external view of the impeller;
Fig. 6A is a plan view of the impeller;
Fig. 6B is a cross sectional view of a blade portion according to the embodiment disclosed here, which is taken along line VIB- VIB of Fig. 6A; and
Fig. 7 is a view schematically illustrating flow of fluid in the vicinity of the blade portion of the impeller that is rotating.

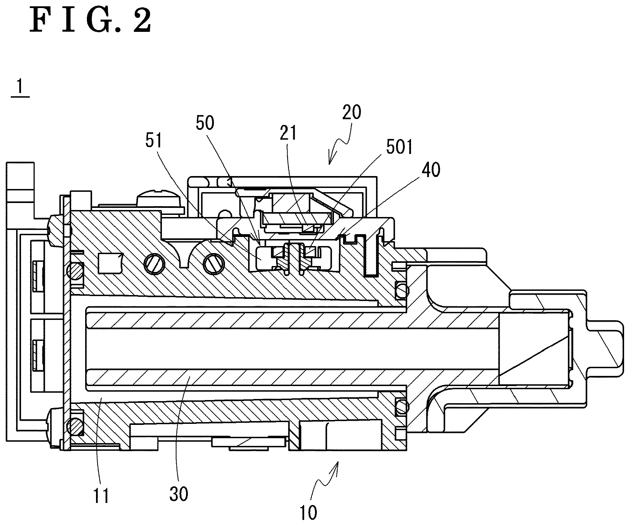

A fluid heating apparatus 1 according to an embodiment disclosed here will be explained in detail. In the following explanation, an upper and lower direction corresponds to a direction that is along a direction of a rotational axis of an impeller 50 (the upper and lower direction in Fig. 2), and a planar direction correspond to a planar direction that is orthogonal to the upper and lower direction.

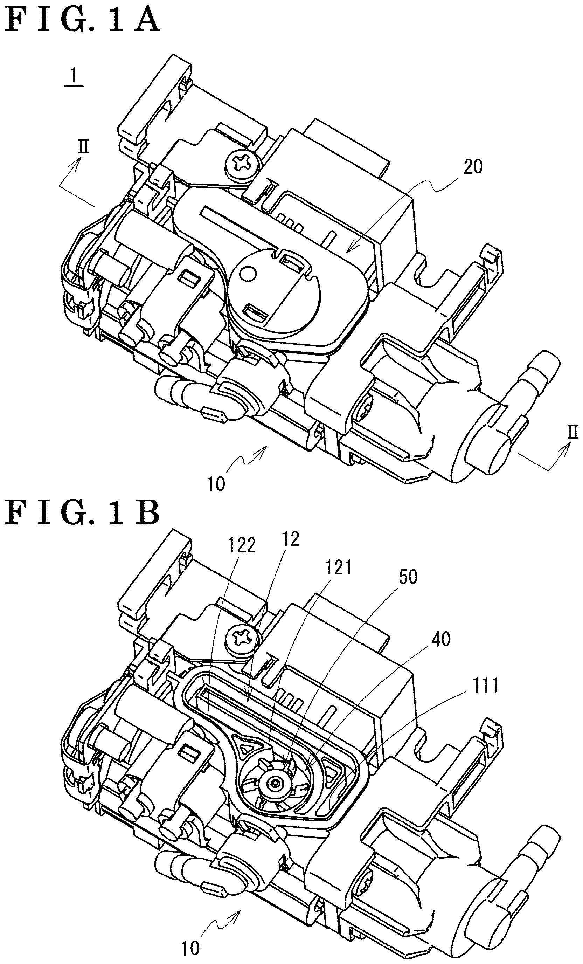

The fluid heating apparatus 1 illustrated in each of Figs. 1 and 2 is used to heat washing water washing a human body private part (that is, the fluid heating apparatus 1 is part of a human body private part washing apparatus). The fluid heating apparatus 1 includes a main body portion 10, a heater 30 and an impeller 50. As illustrated in Fig. 2, the main body portion 10 is provided with a circulation space portion 11 through which fluid (water, for example) flows. The heater 30 including a cylindrical shape is arranged in the circulation space portion 11. The water sent from a water source enters the circulation space portion 11, and thus is heated. Specifically, the water is heated while flowing through an inner side and an outer side of the heater 30. A flow detection region 40 is formed at an outer side (an upper side) of an outside wall forming the circulation space portion 11 of the main body portion 10. The fluid coming out from an exit 111 the circulation space portion 11 flows through a flow passage 12 and enters the flow detection region 40.

As illustrated in Fig. 1B, the flow detection region 40 is a space portion including a substantially circular column shape. The main body portion 10 is provided with a space portion opening upwardly which corresponds to the flow detection region 40. As illustrated in Fig. 1A, a cover portion 20 is fixedly attached to the main body portion 10, and thus the space portion corresponding to the flow detection region 40 is closed or sealed. That is, the cover portion 20 forms an upper wall of the flow detection region 40. In addition, the main body portion 10 is provided with a space portion opening upwardly which serves as the flow passage 12. The cover portion 20 is fixedly attached to the main body portion 10, and thus the space portion serving as the flow passage 12 is closed or sealed. That is, the cover portion 20 forms also an upper wall of the flow passage 12.

The impeller (that is, the vane wheel) 50 is rotatably supported at a support shaft protruding upwardly from a bottom surface 41 (a surface at a bottom side) forming the flow detection region 40. In the present embodiment, as the impeller rotates, it is determined whether or not the fluid of equal to or more than a predetermined amount, which is a subject of the heating by the heater 30, is present. Specifically, it is judged whether or not a rotation speed of the impeller 50 is equal to or more than a predetermined threshold value. In a case where the rotation speed of the impeller 50 is less than the threshold value, the heater 30 is stopped because the heater 30 may heat even though no fluid or an extremely small amount of fluid is present in the apparatus. As explained above, in the present embodiment, it is determined whether or not the fluid equal to or more than the predetermined amount exists, however, it can be also configured such that a flow amount of the fluid is detected on the basis of the rotation of the impeller 50. Any method to detect the rotation of the impeller 50 is applicable. In the present embodiment, a sensor 21 fixedly attached to the cover portion 20 detects a magnet 501 fixedly attached to the impeller 50. In the present embodiment, a rotational direction of the impeller 50 is a clockwise direction when viewed from above.

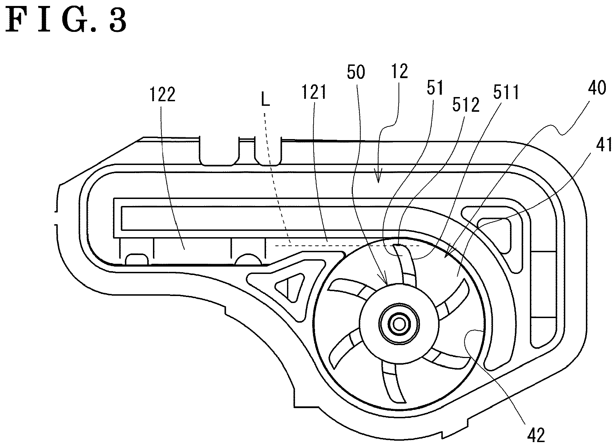

Configurations and shapes, for example, of the impeller 50, the flow detection region 40 and the flow passage 12 will be explained hereunder.
(1) An overall configuration, that is, a general shape, of a blade portion will be explained. The impeller 50 includes plural blade portions 51 (that is, vane portions) extending from a rotational center side of the impeller 50 towards an outer side in a radial direction. Each of the plural blade portions 51 includes an identical configuration and the plural blade portions 51 are positioned at equal distances or intervals in a circumferential direction. As illustrated in, for example, Figs. 3, 5, and 6A, when viewed from the upper and lower direction, each of the blade portions 51 includes a portion curved from a base end side corresponding to the rotational center side towards a distal end side corresponding to the outer side in the radial direction. In the present embodiment, an entire blade portion 51, that is, a whole of each blade portion 51 is curved. The blade portion 51 is curved towards a side opposite to the rotational direction of the impeller 50 from the base end side of the blade portion 51 to the distal end side of the blade portion 51. That is, in the present embodiment, when viewed from above, the blade portion 51 is curved towards a counter clockwise side from the base end side to the distal end side.

Regardless of a rotational direction position of the impeller 50, that is, regardless of what position the impeller 50 is positioned in the rotational direction, at least part of the blade portions 51, that is, at least one of the plural blade portions 51, is positioned in such a manner that the blade portion 51 is curved towards an inlet side of the flow detection region 40. Specifically, an imaginary line L (a line obtained by extending a central axis of a first portion 121 that will be explained below) and the distal end side of at least one blade portion 51 (the distal end side of the blade portion 51 relative to a center in a long side direction of the blade portion 51) positioned in the flow detection region 40 intersect with each other (refer to Fig. 3). The imaginary line L corresponds to the line obtained by linearly extending, without bending or curving, the central axis of the straight portion (i.e., the first portion 121 that will be explained below) at a distal end of the flow passage 12 connected to the flow detection region 40. Accordingly, the fluid, which has increased force while flowing through the straight portion and has entered the flow detection region 40, collides with the distal end side of the curved blade portion 51 without decreasing the force.

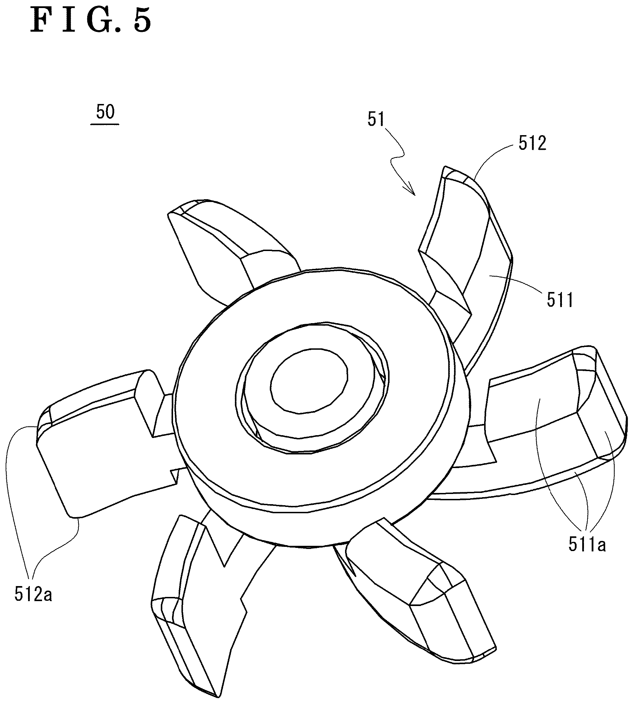

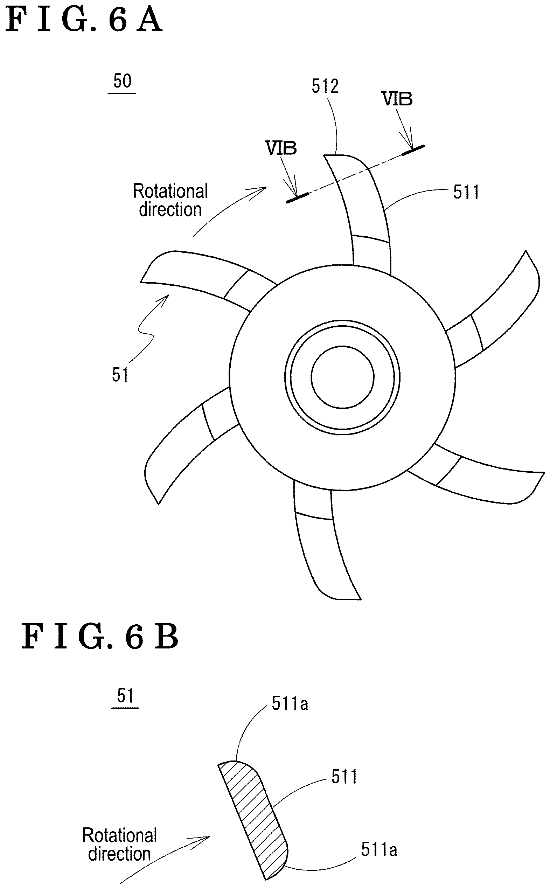

(2) A configuration of a surface of the blade portion, the surface which is at a rotational direction side, will be explained. As illustrated, for example, in Figs. 3, 5, 6A and 6B, each of the blade portions 51 includes a surface 511 at the rotational direction side. The surface 511 includes a curved surface 511a (refer to Figs. 5 and 6B, in particular) formed in such a manner that thickness of the blade portion 51 is reduced towards an outer edge of the blade portion 51. The "surface 511 at the rotational direction side" corresponds to a surface at a front side in the rotational direction of the impeller 50. That is, "the surface 511 at the rotational direction side" corresponds to a surface at a side pushing out the fluid existing inside the fluid space portion. Each of the surface 511 at the rotational direction side is formed in a mound shape that rises or is elevated from the outer edge of the blade portion 51 towards an inner side of the blade portion 51. In the present embodiment, the surface 511 at the rotational direction side which is provided at each blade portion 51 includes "a curved surface" formed so that the thickness of the blade portion 51 is reduced towards the outer edge, however, the surface 511 of each of the blade portions 51 may include "an inclined surface" that is inclined, slanted or sloped from the outer edge towards the inner side. As illustrated in Fig. 6B, a cross section of the blade portion 51 which is cut at a plane that is orthogonal to the long side direction includes a substantial shape of a letter D. Specifically, the cross section includes a shape that is gently or smoothly curved from outer edges in the upper and lower direction of the cross section towards a center in the upper and lower direction. In other words, at one side of the cross section (that is, at the rotational direction side), corners of the cross section at the upper and lower sides are rounded (chamfered).

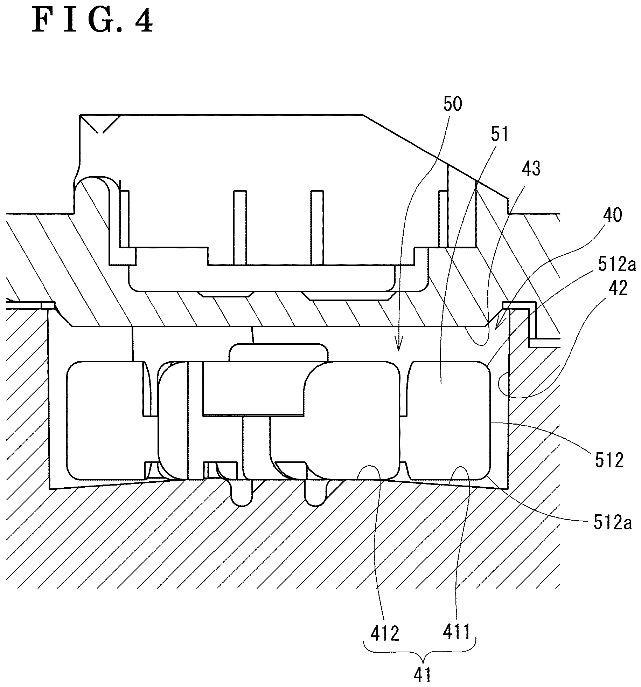

(3) A shape of a distal end surface of the blade portion will be explained. As illustrated specifically in Figs. 4 and 5, each of the blade portions 51 includes a distal end surface 512. The distal end surface 512 includes a curved surface 512a formed in such a manner that length of the blade portion 51 in the radial direction decreases towards an outer edge at the upper side or an outer edge at the lower side. In the present embodiment, the curved surface 512a is provided at each of the upper side and the lower side. In the present embodiment, the distal end surface 512 of each blade portion 51 includes "the curved surface" formed in such a manner that the length of the blade portion 51 is reduced towards the outer edge, however, the distal end surface 512 of each blade portion 51 may include "an inclined surface" that is inclined, slanted or sloped. In other words, when each blade portion 51 is viewed along the planar direction, a corner of a distal end of the blade portion 51 at an upper side and a corner of the distal end of the blade portion 51 at a lower side are rounded (chamfered).

(4) A shape of the bottom surface of the flow detection region will be explained. As illustrated in Fig. 4, the bottom surface 41 (which is formed at the main body portion 10) forming the flow detection region 40 includes a curved surface (which will be referred to also as a curved surface portion 411) formed to be displaced downwardly towards the outer side in the radial direction. The bottom surface 41 forming the flow detection region 40 according to the present embodiment includes the curved surface portion 411 and a flat surface (which will be referred to also as a flat portion 412). The flat portion 412 is formed at an inner side in the radial direction relative to the curved surface portion 411 and the flat portion 412 corresponds to a flat surface along the planar direction. That is, the bottom surface 41 forming the flow detection region 40 includes a shape that is displaced gradually downwardly from the outer side of the flat portion 412 in the radial direction. In other words, a position of the curved surface portion 411 is lower than a position of the flat portion 412. Instead of the curved surface portion 411, an inclined surface (which will be referred to also as an inclined portion) which is inclined, sloped or slanted linearly downwardly towards the outer side in the radial direction may be provided at the radially outer side relative to the flat portion 412. That is, the curved surface portion 411 can be replaced by the inclined surface.

The impeller 50 is in a state of being in contact with the flat portion 412 of the bottom surface 41 forming the flow detection region 40. On the other hand, the impeller 50 is out of contact with the curved surface portion 411 (the inclined portion) that is at the radially outer side relative to the flat portion 412. That is, when the impeller 50 rotates, frictional resistance is generated between the impeller 50 and the flat portion 412, however, the frictional resistance is not generated between the impeller 50 and the curved surface portion 411 (the inclined portion).

(5) A shape of the flow passage will be explained. As illustrated in, for example, Fig. 3, part of the flow passage 12 through which the fluid is sent to the flow detection region 40 is bent so as to make a U-turn, and accordingly the flow passage 12 includes a space-saving shape occupying a small area or a small region. The straight portion of the flow passage 12 which is at a side of the flow detection region 40 (that is, at a downstream side) includes the first portion 121 and a second portion 122. The first portion 121 corresponds to a portion at the most downstream side in the flow passage 12 and an outlet of the first portion 121 is connected to the flow detection region 40. The second portion 122 corresponds to a portion that is at an upstream side relative to the first portion 121 and an outlet of the second portion 122 is connected to an inlet of the first portion 121. A cross-sectional area of the first portion 121 is smaller than a cross-sectional area of the second portion 122. The cross-sectional area of the first portion 121 corresponds to an area of a cross section that is substantially orthogonal to the central axis of the first portion 121 and the cross-sectional area of the second portion 122 corresponds to an area of a cross section that is substantially orthogonal to a central axis of the second portion 122. That is, the flow passage 12 is formed to be narrowed down at a portion leading from the second portion 122 to the first portion 121. A wall surface of a boundary between the second portion 122 and the first portion 121 includes a tapered configuration in which the flow passage 12 becomes narrower gradually.

Operations and effects obtained from the configurations explained in (1) through (5) will be as follows.

Due to the configuration of the impeller 50 (the blade portions 51) explained in (1), the force of the fluid that has entered from the flow passage 12 into the flow detection region 40 is transmitted to the impeller 50 efficiently. That is, each of the blade portions 51 is curved towards the side opposite to the rotational direction, and at least one of the blade portions 51 is positioned in a state of facing towards the inlet side of the flow detection region 40. Consequently, the impeller 50 can be rotated efficiently.

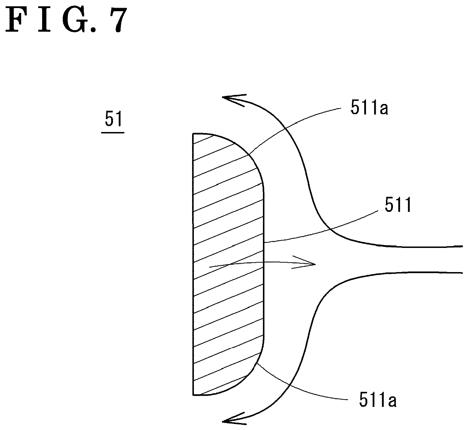

Due to the configuration of the impeller 50 (the blade portions 51) explained in (2), resistance of the water against the impeller 50 (the blade portions 51) that is rotating is reduced. That is, when the impeller 50 rotates, each of the blade portions 51 moves through the fluid existing between the blade portions 51 in such a manner that the blade portion 51 thrusts the fluid aside. Because a surface of each of the blade portions 51, the surface which is at a side of a direction of the movement (that is, the surface 511 at the rotational direction side), includes the curved surface 511a (or the inclined surface) formed in such a manner that the thickness of the blade portion 51 is reduced towards the outer edge, the resistance of the fluid against the blade portion 51 that is moving or travelling is reduced. Specifically, as illustrated in Fig. 7, the corners of the blade portion 51 at the surface 511 at the rotational direction side are formed to be rounded (chamfered), and accordingly it is restricted that the fluid is prevented from flowing. Consequently, the impeller 50 can be rotated efficiently. Further, because each of the blade portions 51 includes the curved surface 511a (or the inclined surface) formed in such a manner that the thickness of the blade portion 51 is reduced towards the outer edge at the upper side or the outer edge at the lower side, a contact area between the blade portion 51 and the bottom surface 41 of the flow detection region 40 or a contact area between the blade portion 51 and an upper surface 43 of the flow detection region 40 (a surface at a bottom side of the cover portion 20) is reduced, accordingly. Consequently, frictional resistance generated between the blade portion 51 and the bottom surface 41 of the flow detection region 40 or frictional resistance generated between the blade portion 51 and the upper surface 43 is reduced. As a result, the impeller 50 can be rotated efficiently.

Due to the configuration of the impeller 50 (the blade portions 51) explained in (3), frictional resistance between the rotating impeller 50 (the blade portions 51) and the wall surface forming the flow detection region 40 is reduced. That is, because each of the blade portions 51 includes the curved surface 512a (or the inclined surface) formed in such a manner that the length of the blade portion 51 is reduced towards the outer edge at the upper side or the outer edge at the lower side, the contact area between the blade portion 51 and the bottom surface 41 of the flow detection region 40 or the contact area between the blade portion 51 and the upper surface of the flow detection region 40 (the surface at the bottom side of the cover portion 20) is reduced, accordingly. Consequently, the frictional resistance generated between the blade portion 51 and the bottom surface 41 of the flow detection region 40 or the frictional resistance generated between the blade portion 51 and the upper surface of the flow detection region 40 is reduced. The curved surface 512a (or the inclined surface) is formed to reduce the contact area between the blade portion 51 and the wall surface forming the flow detection region 40, however, the curved surface 512a is formed at the distal end side of the blade portion 51. Thus, the curved surface 512a does not largely decreases transmission efficiency of the force transmitted from the fluid to the blade portion 51. Consequently, the impeller 50 can be rotated efficiently.

Due to the configuration of the bottom surface 41 forming the flow detection region 40 which is explained in (4), the frictional resistance between the rotating impeller 50 (the blade portions 51) and the bottom surface 41 forming the flow detection region 40 is reduced. That is, because the bottom surface 41 forming the flow detection region 40 includes the curved surface portion 411 formed so as to be displaced downwardly towards the outer side in the radial direction, the contact area between the blade portion 51 and the bottom surface 41 forming the flow detection region 40 is reduced. Consequently, the frictional resistance generated between the blade portion 51 and the bottom surface 41 forming the flow detection region 40 can be reduced.

In addition, the bottom surface 41 forming the flow detection region 40 includes the curved surface portion 411 and the flat portion 412 formed at the inner side relative to the curved surface portion 411. The impeller 50 is in a state of being in contact with the flat portion 412 and being out of contact with the curved surface portion 411. Thus, because the impeller 50 is supported at the flat portion 412, the impeller 50 is rotated in a stable state. In addition, a clearance does not exist between the blade portions 51 and the flat portion 412 (the clearance is minute or extremely small), and accordingly the fluid pushing the blade portions 51 cannot pass through between the blade portions 51 and the flat portion 412 (the fluid pushing the blade portions 51 does not almost pass through between the blade portions 51 and the flat portion 412). That is, the fluid is restricted from escaping from between the blade portions 51 and the flat portion 412, and thus the transmission efficiency of the force transmitted to the blade portions 51 is not deteriorated significantly. Consequently, the impeller 50 can be rotated efficiently.

As the curved surface portion 411 is provided at the outer portion of the bottom surface 41 forming the flow detection region 40, an angle formed by the bottom surface 41 forming the flow detection region 40 and a side surface 42 (a surface along the upper and lower direction) forming the flow detection region 40 is an acute angle. Accordingly, even in a case where a distance between the distal end surface 512 of the blade portion 51 of the impeller 50 and the side surface 42 forming the flow detection region 40 is small, that is, even in a case where the distal end surface 512 and the side surface 42 are close to each other, it is prevented that a corner of the lower side of the distal end of the blade portion 51, and a corner formed by the bottom surface 41 forming the flow detection region 40 and the side surface 42 forming the flow detection region 40 are in contact with each other. Consequently, also in this aspect, the efficiency in the rotation of the impeller 50 can be enhanced.

Due to the configuration of the flow passage 12 which is explained in (5), flow speed of the fluid entering the flow detection region 40 is increased. That is, the flow passage 12 through which the fluid is transmitted to the flow detection region 40 includes the configuration where the cross-sectional area of the first portion 121 of which the outlet is connected to the flow detection region 40 is smaller than the cross-sectional area of the second portion 122 (the boundary between the first portion 121 and the second portion 122 is "narrowed"). Accordingly, the flow speed of the fluid entering the flow detection region 40 is increased. Consequently, a force pushing the impeller 50 is increased, thereby to rotate the impeller 50 efficiently.

In particular, in the present embodiment, the imaginary line L and the distal end side of at least one of the blade portions 51 arranged in the flow detection region 40 intersect with each other. The imaginary line L is obtained by extending linearly, without bending or curving, the first portion 121 serving as the distal end portion of the flow passage 12 which is connected to the flow detection region 40. Accordingly, the fluid that has rushed into the flow detection region 40 collides with the distal end side of the curved blade portion 51 with the speed of the flow maintained. Consequently, the efficiency with which the impeller 50 is rotated is enhanced.

As explained above, according to the fluid heating apparatus 1 related to the present embodiment, a rotation property of the impeller 50 is enhanced, and accordingly a detection performance on the presence or absence of the fluid is enhanced. As in the present embodiment, in the configuration in which the heater 30 is stopped if the fluid (the amount of flow) is less than the threshold value so that the heating with no fluid or almost no fluid is prevented, a detection performance on whether or not the fluid (the amount of flow) is equal to or more than the threshold value is enhanced. In a case where the apparatus is configured to detect the flow amount of the fluid according to the rotation of the impeller 50, a detection performance on the flow amount of the fluid (calculation accuracy) is enhanced.

The embodiment disclosed here is described in detail above, however, the present disclosure is not limited to the aforementioned embodiment.

In the aforementioned embodiment, the case is explained in which the fluid heating apparatus 1 is applied to the human body private part washing apparatus, however, the fluid heating apparatus 1 is applicable to other apparatus. In addition, a fluid serving as an object of detection by the rotation of the impeller 50 is not limited to water.

## Claims

1. A fluid heating apparatus (1), comprising:
an impeller (50) arranged in a flow detection region (40) in which flow of fluid to be heated by a heater (30) is detected, wherein
the impeller (50) includes a blade portion (51), and the blade portion (51) includes a portion curved from a base end side corresponding to a rotational center side to a distal end side corresponding to an outer side, the portion being curved towards a side that is opposite to a rotational direction
**characterized in that**
the flow detection region (40) includes a bottom surface (41) including a curved surface (411) or an inclined surface,
the impeller (50) is rotatably supported at a support shaft protruding upwardly from the bottom surface (41) forming the flow detection region (40), and
the curved surface (411) or the inclined surface is formed to be displaced downwardly towards the outer side in the radial direction.

2. The fluid heating apparatus (1) according to claim 1, wherein the blade portion (51) includes a surface (511) at a rotational direction side, the surface (511) at the rotational direction side includes a curved surface (511a) or an inclined surface, and the curved surface (511a) or the inclined surface is formed in such a manner that thickness of the blade portion (51) is reduced towards an outer edge.

3. The fluid heating apparatus (1) according to either claim 1 or 2, wherein
the flow detection region (40) includes a flat surface (412) positioned at an inner side relative to the curved surface (411) or the inclined surface.

4. The fluid heating apparatus (1) according to any one of claims 1 to 3, comprising:
a flow passage (12) through which the fluid is sent to the flow detection region (40), wherein the flow passage (12) includes
a first portion (121) of which an outlet is connected to the flow detection region (40), and
a second portion (122) of which an outlet is connected to an inlet of the first portion (121), and
a cross-sectional area of the first portion (121) is smaller than a cross-sectional area of the second portion (122).

5. The fluid heating apparatus (1) according to any one of claims 1 to 4, wherein
the blade portion (51) includes a distal end surface (512) including a curved surface (512a) or an inclined surface, and
the curved surface (512a) or the inclined surface is formed in such a manner that the length of the blade portion (51) is reduced towards an outer edge at an upper side or an outer edge at a lower side.

6. The fluid heating apparatus (1) according to any one of claims 1 to 5, wherein
the blade portion (51) includes a surface (511) at a rotational direction side, the surface (511) at the rotational direction side includes
a curved surface (511a) or an inclined surface, and the curved surface (511a) or the inclined surface is formed in such a manner that
the thickness of the blade portion (51) is reduced towards an outer edge at an upper side or an outer edge at a lower side.

## Patentansprüche

1. Fluid-Erwärmungsvorrichtung (1), umfassend:
ein Laufrad (50), das in einem Strömungserfassungsbereich (40) angeordnet ist, in dem eine Strömung eines durch eine Heizvorrichtung (30) zu erwärmenden Fluids erfasst wird, wobei
das Laufrad (50) einen Schaufelabschnitt (51) hat, und der Schaufelabschnitt (51) einen Abschnitt hat, der von einer Basisendseite, die einer Rotationsmittelseite entspricht, zu einer distalen Endseite, die einer Außenseite entspricht, gekrümmt ist, wobei der Abschnitt zu einer Seite hin gekrümmt ist, die einer Drehrichtung entgegengesetzt ist,
**dadurch gekennzeichnet, dass**
der Strömungserfassungsbereich (40) eine Bodenfläche (41) aufweist, die eine gekrümmte Fläche (411) oder eine geneigte Fläche hat,
das Laufrad (50) drehbar an einer Stützwelle gelagert ist, die von der Bodenfläche (41), die den Strömungserfassungsbereich (40) bildet, nach oben ragt, und
die gekrümmte Oberfläche (411) oder die geneigte Oberfläche so ausgebildet ist, dass sie in der radialen Richtung nach unten zu einer Außenseite hin verschoben ist.

2. Fluid-Erwärmungsvorrichtung (1) nach Anspruch 1, wobei der Schaufelabschnitt (51) eine Oberfläche (511) an einer Drehrichtungsseite aufweist, die Oberfläche (511) an der Drehrichtungsseite eine gekrümmte Oberfläche (511a) oder eine geneigte Oberfläche aufweist, und die gekrümmte Oberfläche (511a) oder die geneigte Oberfläche so ausgebildet ist, dass die Dicke des Schaufelabschnitts (51) zu einer Außenkante hin reduziert ist.

3. Fluid-Erwärmungsvorrichtung (1) nach entweder Anspruch 1 oder 2, wobei
der Strömungserfassungsbereich (40) eine ebene Fläche (412) aufweist, die an einer Innenseite relativ zu der gekrümmten Fläche (411) oder der geneigten Fläche angeordnet ist.

4. Fluid-Erwärmungsvorrichtung (1) nach einem der Ansprüche 1 bis 3, umfassend
einen Strömungskanal (12), durch den das Fluid zu dem Strömungserfassungsbereich (40) geleitet wird, wobei der Strömungskanal (12) umfasst
einen ersten Abschnitt (121), von dem ein Auslass mit dem Strömungserfassungsbereich (40) verbunden ist, und
einen zweiten Abschnitt (122), von dem ein Auslass mit einem Einlass des ersten Abschnitts (121) verbunden ist, und
eine Querschnittsfläche des ersten Abschnitts (121) kleiner als eine Querschnittsfläche des zweiten Abschnitts (122) ist.

5. Fluid-Erwärmungsvorrichtung (1) nach einem der Ansprüche 1 bis 4, wobei
der Schaufelabschnitt (51) eine distale Endfläche (512) aufweist, die eine gekrümmte Oberfläche (512a) oder eine geneigte Oberfläche hat, und
die gekrümmte Fläche (512a) oder die geneigte Fläche so ausgebildet ist, dass die Länge des Schaufelabschnitts (51) zu einer Außenkante an einer Oberseite oder einer Außenkante an einer Unterseite hin reduziert ist.

6. Fluid-Erwärmungsvorrichtung (1) nach einem der Ansprüche 1 bis 5, wobei
der Schaufelabschnitt (51) eine Oberfläche (511) an einer Drehrichtungsseite aufweist, wobei die Oberfläche (511) an der Drehrichtungsseite aufweist
die Oberfläche (511) an der Drehrichtungsseite eine gekrümmte Oberfläche (511a) oder eine geneigte Oberfläche umfasst, und die gekrümmte Oberfläche (511a) oder die geneigte Oberfläche derart ausgebildet ist, dass die Dicke des Schaufelabschnitts (51) in Richtung einer Außenkante an einer oberen Seite oder einer Außenkante an einer unteren Seite reduziert ist.

## Revendications

1. Appareil de chauffage de fluide (1) comprenant :
une roue (50) agencée dans une région de détection d'écoulement (40) dans laquelle l'écoulement du fluide à chauffer par un dispositif de chauffage (30) est détecté, dans lequel :
la roue (50) comprend une partie de pale (51) et la partie de pale (51) comprend une partie incurvée à partir d'un côté d'extrémité de base correspondant à un côté de centre de rotation jusqu'à un côté d'extrémité distale correspondant à un côté externe, la partie étant incurvée vers un côté qui est opposé à une direction de rotation,
**caractérisé en ce que** :
la région de détection d'écoulement (40) comprend une surface inférieure (41) comprenant une surface incurvée (411) ou une surface inclinée,
la roue (50) est supportée, de manière rotative, au niveau d'un arbre de support faisant saillie vers le haut à partir de la surface inférieure (41) formant la région de détection d'écoulement (40), et
la surface incurvée (411) ou la surface inclinée est formée pour être déplacée vers le bas vers le côté externe dans la direction radiale.

2. Appareil de chauffage de fluide (1) selon la revendication 1, dans lequel la partie de pale (51) comprend une surface (511) d'un côté de la direction de rotation, la surface (511) du côté de la direction de rotation comprend une surface incurvée (511a) ou une surface inclinée, et la surface incurvée (511a) ou la surface inclinée est formée de sorte que l'épaisseur de la partie de pale (51) est réduite vers un bord externe.

3. Appareil de chauffage de fluide (1) selon la revendication 1 ou 2, dans lequel :
la région de détection d'écoulement (40) comprend une surface plate (412) positionnée au niveau d'un côté interne par rapport à la surface incurvée (411) ou la surface inclinée.

4. Appareil de chauffage de fluide (1) selon l'une quelconque des revendications 1 à 3, comprenant :
un passage d'écoulement (12) à travers lequel le fluide est envoyé vers la région de détection d'écoulement (40), dans lequel le passage d'écoulement (12) comprend :
une première partie (121) dont une sortie est raccordée à la région de détection d'écoulement (40), et
une seconde partie (122), dont une sortie est raccordée à une entrée de la première partie (121), et
une zone transversale de la première partie (121) est inférieure à une zone transversale de la seconde partie (122).

5. Appareil de chauffage de fluide (1) selon l'une quelconque des revendications 1 à 4, dans lequel :
la partie de pale (51) comprend une surface d'extrémité distale (512) comprenant une surface incurvée (512a) ou une surface inclinée, et
la surface incurvée (512a) ou la surface inclinée est formée de sorte que la longueur de la partie de pale (51) est réduite vers un bord externe au niveau d'un côté supérieur ou un bord externe au niveau du côté inférieur.

6. Appareil de chauffage de fluide (1) selon l'une quelconque des revendications 1 à 5, dans lequel :
la partie de pale (51) comprend une surface (511) du côté de la direction de rotation, la surface (511), du côté de la direction de rotation comprend :
une surface incurvée (511a) ou une surface inclinée, et la surface incurvée (511a) ou la surface inclinée est formée de sorte que l'épaisseur de la partie de pale (51) est réduite vers un bord externe au niveau d'un côté supérieur ou un bord externe au niveau d'un côté inférieur.
